# EUROPEAN PATENT APPLICATION

(11) **EP 3 960 841 A1**
(43) Date of publication of application: **02.03.2022**
(21) Application number: 20795095.7
(22) Date of filing: 21.04.2020
(51) Int. Cl.: C12C 5/02, A23L 2/00, A23L 2/56

(54) **METHOD FOR PRODUCING BEVERAGE**

(30) Priority: 26.04.2019 JP 2019086392
(71) Applicant: Suntory Holdings Limited, Osaka 530-8203 (JP)
(72) Inventor: INUI, Takako, Ibaraki-shi, Osaka (JP)
(74) Representative: Vossius & Partner Patentanwälte Rechtsanwälte mbB
(86) International application number: PCT/JP2020/017197
(87) International publication number: WO 2020/218295

(57) **Abstract**

A method for producing a beverage including adding a herb spice treated product to a beverage, or in at least any one of the steps for producing a beverage, wherein the herb spice treated product is obtained by treating a liquid containing a herbal spice in a tightly closed container under the conditions of a temperature of 100°C or higher and 140°C or lower, and a pressure of 0.01 MPa or more and 0.46 MPa or less. According to the present invention, flavor ingredients can be more conveniently extracted from herbal spices, so that a new taste can be provided as a luxurious product.

## Description

### TECHNICAL FIELD

The present invention relates to a method for producing a beverage.

### BACKGROUND ART

With the diversification of the inclinations of the consumers in the recent years, the development of beer-taste beverages having various flavor characteristics has been desired. As a means of allowing to have a diversity of the flavors, various herb spices have been used as raw materials. In a traditional method for brewing beer using herb spices, as described in Non-Patent Publication 1, a method including adding a herb spice to the wort boiling step or adding a herb spice in the fermentation step or storage (stored liquor) step, to extract the flavor ingredients has been adopted.

### RELATED ART REFERENCES

### NON-PATENT PUBLICATIONS

Non-Patent Publication 1: BEER STYLES from Around the World, authored by Horst Dornbusch, published by 2015 Cervisia Communications

### SUMMARY OF THE INVENTION

### PROBLEMS TO BE SOLVED BY THE INVENTION

However, in these production methods, the loss by evaporation or oxidation of the flavor ingredients due to heating is caused in the addition during the boiling of wort, and the extraction of the flavor ingredients is insufficient in the addition during the fermentation or storage, so that sufficient flavors cannot be given to the manufactured articles. For this reason, a method for production for efficiently giving high-quality flavor ingredients is earnestly desired.

The present invention relates to a method for producing a beverage for efficiently giving a herb spice flavor to the beverage.

### MEANS TO SOLVE THE PROBLEMS

The present invention relates to a method for producing a beverage including adding a herb spice treated product to a beverage or in at least any one of the steps for producing a beverage, wherein the herb spice treated product is obtained by treating a liquid containing a herb spice in a tightly closed container under the conditions of a temperature of 100°C or higher and 140°C or lower, and a pressure of 0.01 MPa or more and 0.46 MPa or less.

### EFFECTS OF THE INVENTION

According to the present invention, a method for producing a beverage for efficiently giving a herb spice flavor to the beverage can be provided.

### MODES FOR CARRYING OUT THE INVENTION

As a result of intensive studies in view of the above problems, the inventors of the present invention have newly found out that the utilization efficiency of the flavor ingredients contained in the raw materials can be improved by adding a herb spice treated product to a beverage, wherein the herb spice treated product is obtained by subjection to a specified high-temperature, high-pressure treatment in a tightly closed container. Although the mechanisms are not certain, it is assumed to be due to the inhibition of evaporation of the aroma ingredients by the heat treatment in the tightly closed system, and the acceleration of the ingredient extraction from the physical raw material treatment by pressurization.

The method for production of the present invention includes adding a herb spice treated product to a beverage or in at least any one of the steps of production of a beverage, wherein the herb spice treated product is obtained by subjecting a liquid containing a herb spice to a specified high-temperature, high-pressure treatment in a tightly closed container.

The tightly closed container may have any structure durable to high temperatures and high pressures, and a known container can be used. In addition, as a tightly closed container, a known treatment tank which is communicated with other tanks or the like via a pipe at times other than the treatment time, and has a valve in which the valve is closed to create a closed space, completely shutting off the external during the treatment can be used.

In the method for production of the present invention, the liquid containing a herb spice (hereinafter also referred to as "a herb spice-containing liquid") is filled in a tightly closed container, and subjected to a high-temperature, high-pressure treatment. From the viewpoint of efficiently carrying out the treatment, it is preferable that the treatment within the container is:
(i) in a state that a liquid containing a herb spice is filled in the container in a volume of 50% by volume or less; and
(ii) in a state that the remaining space excluding the portions occupied by a liquid containing a herb spice is nitrogen replaced or oxygen replaced.

The herb spice-containing liquid contains a herb spice and a medium, including not only a simple mixture thereof but also a mixture of a herbal spice and a medium subjected to some sorts of treatment (for example, stirring treatment).

The herbal spice in the herb spice-containing liquid includes, but not particularly limited to, anise, star anise, laurel, lavender, sage, coriander, fennel, hyssop, oregano, peppermint, rosemary, spearmint, caraway, orange peel, lemon peel, bog myrtle, jasmine, basil, *yuzu* (citron) peel, Rucola, perennial wall-rocket, *Perilla frutescens var. acuta (shiso),* thyme, chervil, dill, mint, *Petroselinum neapolitanum,* parsley, coriander, marjoram, savory, tarragon, chive, agrimony, avens, betony, burdock, clove, juniper, costmary, dog rose, elecampane, eyebright, gentian, ground ivy, mugwort, rue, Saint-John's-wort, wormwood, yarrow, alkanet, pennyroyal, hibiscus, stevia, lemon balm, chamomile, ginger, pepper, blue marrow, lime tree, lemongrass, hops, and the like, and one or more of them can be used in combination. The herb spice may be directly used, or optionally milled or the like. Here, when a beer-taste beverage is produced, it is preferable that a herb spice at least other than hops is contained.

The medium in the herb spice-containing liquid includes water, buffers, sugar liquids, wort, and the like, and one or more of them can be used in combination. Here, when a beer-taste beverage is produced, a wort may be used as a medium in the herb spice-containing liquid. The concentration of the dissolved oxygen of the medium in the herb spice-containing liquid is preferably 6.0 ppm or more, more preferably 10 ppm or more, and even more preferably 20 ppm or more, from the viewpoint of increasing the degradation products of fatty acids which are precursors of fatty acid esters, and the upper limit can be, but not particularly limited to, for example, 22 ppm or less, and the concentration may be within the range of any one of the combinations mentioned above. In addition, the concentration is preferably 3.0 ppm or less, more preferably 1.0 ppm or less, even more preferably 0.5 ppm or less, and even more preferably 0.05 ppm or less, from the viewpoint of inhibiting oxidation of the aroma ingredients, and the lower limit can be, but not particularly limited to, for example, 0.001 ppm or more, and the concentration may be within the range of any one of the combinations mentioned above. The concentration of the dissolved oxygen as used herein is measured by diaphragm electrode method.

The concentration of the herb spice (solid content) in the herb spice-containing liquid is, but not particularly limited to, preferably 10 g/L or more, more preferably 20 g/L or more, and even more preferably 40 g/L, from the viewpoint of the treatment efficiency, and the concentration is preferably 60 g/L or less, more preferably 40 g/L or less, and even more preferably 70 g/L or less, from the same viewpoint, and the concentration may be within the range of any one of the combinations mentioned above. In the method for production of the present invention, since the treatment medium does not evaporate during the high-temperature, high-pressure treatment, the herb spice concentration in the herb spice treated product obtained does not hardly fluctuate from the above. The solid content of the herb spice means a dry weight of the herb spice before the addition.

The treatment temperature in the high-temperature, high-pressure treatment is 100°C or higher, preferably 105°C or higher, and more preferably 110°C or higher, from the viewpoint of extracting the aroma ingredients from the hard raw material structure, and the treatment temperature is 140°C or lower, preferably 120°C or lower, more preferably 110°C or lower, from the viewpoint of inhibiting the degradation of the aroma ingredients, and the treatment temperature may be within the range of any one of combinations mentioned above. Here, the treatment temperature as used herein means a set temperature of the tightly closed container.

The treatment pressure in the high-temperature, high-pressure treatment is 0.1 MPa or more, preferably 0.12 MPa or more, and more preferably 0.14 MPa or more, from the viewpoint of promoting the extraction of the aroma ingredients, and the treatment pressure is 0.46 MPa or less, preferably 0.2 MPa or less, and more preferably 0.15 MPa or less, from the viewpoint of inhibiting the degradation of the aroma ingredients, and the treatment pressure may be within the range of any one of the combinations mentioned above. The term "pressure" as used herein means a "gauge pressure." Therefore, for example, when "a pressure of 0.01 MPa" is converted to an absolute pressure, it means a pressure in which 0.01 MPa is applied to the atmosphere.

Preferred combinations of the treatment temperature and the treatment pressure include, for example, the conditions of 100°C and 0.15 MPa, the conditions of 110°C and 0.12 MPa, and the like.

The treatment time in the high-temperature, high-pressure treatment is not unconditionally determined because the treatment time depends upon the size of the tightly closed container, the treatment temperature, and the treatment pressure. For example, when a pressurizing treatment is carried out at 110° to 120°C with a tank having a volume of 60 L or so, the treatment time is preferably from 1 to 60 minutes after reaching the treatment temperature, and more preferably from 15 to 30 minutes. Here, the treatment time as used herein is the time for which the heating is continued, and the pressure during this time does not need to continuously show the pressure mentioned above, but may show the above pressure part of the time.

The herb spice treated product is obtained by the high-temperature, high-pressure treatment as described above. From the viewpoint of inhibiting the evaporation of the aroma ingredients to the external of the container, thereby allowing the treated product obtained to absorb the aroma ingredients in larger amounts, it is preferable that the herb spice treated product before releasing the pressure of the tightly closed container is cooled to a temperature of preferably 90°C or lower, more preferably 70°C or lower, even more preferably 50°C or lower, and even more preferably 40°C or lower. The lower limit can be, for example, 10°C or more. The cooling method is not particularly limited, and the cooling may be carried out positively, or allowed to stand in the air. In addition, treatments such as filtration, concentration, fractionation, and drying may be optionally carried out.

The herb spice treated product thus obtained has a strong aroma, capable of giving an aroma of a herb spice to a beverage even with a small amount added. In the strength of the aroma of the herb spice treated product, the mass ratio of a total content of α-pinene, β-myrcene, D-limonene, or terpineol to a content of linalool (total content of α-pinene, β-myrcene, D-limonene, or terpineol / linalool) in the herb spice treated product can be used as an index. Although the mass ratio depend upon the raw materials herb spice, it is preferable that the mass ratio is 150% or more of those in a case where the same herb spice-containing liquid is heat-treated under an ambient pressure.

The beverage in the method for production of the present invention is not particularly limited so long as the beverage desires to be given with an aroma of a herb spice, and the beverage includes, for example, beer-taste beverages, refreshing beverages, coffee, black tea, green tea, fruit juice beverages, and the like. Among them, the beer-taste beverages include alcohol-containing beer-taste beverages and nonalcoholic beer-taste beverages, and both of the beer-taste beverages can be produced in the same manner as the general beer-taste beverages except for adding a herb spice treated product. In the production embodiment of the beer-taste beverage, as the herb spice used as a raw material for the herb spice treated product, it is preferable to use raw materials at least other than hops, from the viewpoint of giving a characteristic aroma other than hops. In other words, the raw materials for the herb spice treated product may use hops or may not use hops, and it is preferable that a herb spice at least other than hops is used. The embodiments for producing beer-taste beverages will be exemplified hereinbelow. The embodiments for producing a beer-taste beverage are one in which malts are used and one not used as raw materials, which can be produced in the following manner.

As to the beer-taste beverage containing an alcohol produced using malts as raw materials, first, to a mixture containing raw materials such as wheat such as malts, optionally other grains, starches, sugars, a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and the mixture may be boiled. The hops may be mixed at any stage from the beginning of boiling to before the termination of boiling. As the conditions in the saccharification step, the boiling step, the solid content removal step, and the like, known conditions may be used. As the conditions in the fermentation and storage (stored liquor) steps, known conditions may be used. The fermentation liquid obtained is filtered, and a carbon dioxide gas is added to a filtrate obtained. Thereafter, a container is filled, and subjected to a sterilizing step, to obtain an intended beer-taste beverage. In each of the above steps, the herb spice treated product may be added in any steps up to filling. It is preferable that the herb spice treated product is mixed in the steps after the termination of boiling wort, from the viewpoint of the transfer rate of the ingredients.

As to the beer-taste beverage containing an alcohol produced without using malts as raw materials, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. As a substitute for this saccharified liquid, hops may be added to a hot water added with an extract using raw materials other than malts, and a mixture may be boiled. The hops may be mixed at any stage from the beginning of boiling to before the termination of boiling. As the conditions in the fermentation and storage steps, known conditions may be used. The fermentation liquid obtained is filtered, and a carbon dioxide gas is added to a filtrate obtained. Thereafter, a container is filled, and subjected to a sterilizing step, to obtain an intended beer-taste beverage. In each of the above steps, the herb spice treated product may be added in any steps up to filling. It is preferable that the herb spice treated product is mixed in the steps after the termination of boiling hops, from the viewpoint of the transfer rate of the ingredients.

As to the beer-taste beverage which is non-fermented and contains an alcohol, the beer-taste beverage may be one in which an alcohol content of a final manufactured product is adjusted by adding an alcohol for raw materials and the like, irrespective of malts being used or unused. The alcohol for raw materials may be added in any steps from the saccharification step to the filling step. In each of the above steps, the herb spice treated product may be added in any steps up to filling. It is preferable that the herb spice treated product is mixed in the steps before the filtration, from the viewpoint of the transfer rate of the ingredients.

As to the nonalcoholic beer-taste beverage produced by using malts as raw materials, first, to a mixture containing raw materials such as wheat such as malts, optionally other grains, starches, sugars, and a bittering agent, or a colorant, and water is added an enzyme such as amylase optionally to carry out gelatinization or saccharification, and the mixture is then filtered, to provide a saccharified liquid. Hops, a bittering agent or the like is optionally added to the saccharified liquid, and a mixture is boiled, to remove solid contents such as coagulated proteins in a clearing tank. As a substitute for this saccharified liquid, hops may be added to a hot water added with a malt extract, and a mixture may be boiled. The hops may be mixed at any stage from the beginning of boiling to before the termination of boiling. As the conditions in the saccharification step, the boiling step, the solid content removal step, and the like, known conditions may be used. After boiling, the wort obtained is filtered, and a carbon dioxide gas is added to a filtrate obtained. Thereafter, a container is filled, and subjected to a sterilizing step, to obtain an intended nonalcoholic beer-taste beverage. In each of the above steps, the herb spice treated product may be added in any steps up to filling. It is preferable that the herb spice treated product is mixed in the steps after the termination of boiling wort, from the viewpoint of the transfer rate of the ingredients.

In the case of producing a nonalcoholic beer-taste beverage without using malts as raw materials, first, a liquid sugar containing a carbon source, a nitrogen source as an amino acid-containing material other than wheat or malts, hops, a pigment, and the like are mixed together with a hot water, to provide a liquid sugar-containing solution. The liquid sugar-containing solution is boiled. When hops are used as raw materials, the hops may be mixed with the liquid sugar-containing solution during boiling, not before the beginning of boiling. A carbon dioxide gas is added to the liquid sugar-containing solution after boiling. Thereafter, a container is filled, and subjected to a sterilizing step, to obtain an intended nonalcoholic beer-taste beverage. In each of the above steps, the herb spice treated product may be added in any steps up to filling. It is preferable that the herb spice treated product is mixed in the steps after boiling, from the viewpoint of the transfer rate of the ingredients.

The term "beer-taste beverage" as used herein refers to a carbonated beverage having a beer-like flavor. In other words, the beer-taste beverage of the present specification embraces all the carbonated beverages having a beer flavor, unless specified otherwise. Among them, the term "nonalcoholic beer-taste beverage" refers to a beer-taste beverage having an alcoholicity of less than 1%, and preferably does not substantially contain an alcohol. The beverage of the embodiment that substantially does not contain an alcohol does not intend to exclude a beverage containing a very small amount of alcohol to an extent that is undetectable. A beverage of which alcoholicity would be rounded off to 0.0%, and especially a beverage of which alcoholicity is rounded off to 0.00%, is embraced in the nonalcoholic beer-taste beverage. The kinds of the beer-taste beverage obtained in the method for production of the present invention include, for example, nonalcoholic beer-taste beverages, beer-taste refreshing beverages, and the like. Here, the term "alcoholicity (alcohol content)" as used herein means the content of ethanol, but an aliphatic alcohol is not included therein. In addition, the ethanol content, in terms of a volume ratio, in the beer-taste beverage containing an alcohol is, but not particularly limited to, preferably from 1% to 10%.

The alcoholicity of the beer-taste beverage obtained in the method for production of the present invention means a content (v/v%) of an alcoholic content of the beverage, and the alcoholicity can be measured by any of known methods. For example, the alcoholicity can be measured with an oscillating densitometer. Specifically, a sample in which a carbon dioxide gas is degassed from a beverage by filtration or ultrasonication is prepared, and the sample is distilled with direct flame, and a density of the distillated solution obtained is measured at 15°C, and the alcoholicity can be converted and obtained from "Table 2 Alcoholic Content and Density (15°C) and Specific Gravity (15/15°C) Conversion Table" which is an annex to Internal Revenue Bureau, Specified Analysis Method (2007 Internal Revenue Bureau Order No. 6, revised June 22, 2007). In a case of a low concentration with an alcoholicity of less than 1.0%, a commercially available alcohol measurement instrument or gas chromatography may be used.

In the method for production of the present invention, an aliphatic alcohol may be added to the beer-taste beverage, from the viewpoint of giving a liquor-taste. The aliphatic alcohol is not particularly limited so long as it is a known one, and an aliphatic alcohol having 4 to 5 carbon atoms is preferred. In the present invention, preferred aliphatic alcohols include aliphatic alcohols having 4 carbon atoms such as 2-methyl-1-propanol and 1-butanol; and aliphatic alcohols having 5 carbon atoms such as 3-methyl-1-butanol, 1-pentanol, and 2-pentanol. These aliphatic alcohols can be used alone or in a combination of two or more kinds. The content of the aliphatic alcohol having 4 to 5 carbon atoms is preferably from 0.0002 to 0.0007% by mass, and more preferably from 0.0003 to 0.0006% by mass. In the present specification, the content of the aliphatic alcohol can be measured by using a headspace gas chromatography.

### (Calories)

Among the beer-taste beverages obtained in the method for production of the present invention, it is desired that the nonalcoholic beer-taste beverage is low in calories, matching in the favor of low-calorie diets in the recent years. Therefore, the beer-taste beverage obtained in the method for production of the present invention has the number of calories of preferably less than 5 kcal/100 mL, more preferably less than 4 kcal/100 mL, and even more preferably less than 3 kcal/100 mL.

The number of calories included in the beer-taste beverage obtained in the method for production of the present invention is basically calculated in accordance with "Method and the like for Analyzing Nutrient Ingredients etc. in Nutritional Labelling Standards" published in association with the Health Promotion Act. In other words, in principle, the number of calories can be calculated as a total sum of the amount of the various nutrient ingredients quantified multiplied by an energy conversion coefficient of each ingredient (protein: 4 kcal/g, fat: 9 kcal/g, saccharide: 4 kcal/g, dietary fibers: 2 kcal/g, alcohol: 7 kcal/g, or organic acid: 3 kcal/g). For details, see "Method and the like for Analyzing Nutrient Ingredients etc. in Nutritional Labelling Standards."

Specific measurement methods for the amounts of each of nutrient ingredients contained in the beer-taste beverage obtained in the method for production of the present invention may be carried out in accordance with various methods of analyses described in the Health Promotion Act, "Method and the like for Analyzing Nutrient Ingredients etc. in Nutritional Labelling Standards." Alternatively, if requested to Incorporated Foundation, Japan Food Research Laboratories, one can know the calories and/or each of amounts of nutrient ingredients.

### (Saccharides)

The saccharides contained in the beer-taste beverage obtained in the method for production of the present invention refer to saccharides based on the Nutritional Labelling Standards for Foods (2003 Ministry of Health, Labour, and Welfare, Announcement No. 176). Specifically, the saccharides refer to a group of foods from which proteins, fats, dietary fibers, ashes, alcohols, and water are excluded. In addition, the amount of saccharides in the foods is calculated by deduction of the amounts of proteins, fats, dietary fibers, ashes, and water from the weight of the above foods. In this case, the amounts of proteins, fats, dietary fibers, ashes, and water are measured by a method set out in the Nutritional Labelling Standards. Specifically, the amount of proteins is measured by nitrogen quantification conversion method; the amount of fats is measured by an ether extraction method, a chloroform-methanol liquid mixture extraction method, a Gerber method, an acid decomposition method or a Roese-Gottlieb method; the amount of dietary fibers is measured by high-performance liquid chromatography or Prosky method; the amount of ashes is measured by a method of ashing with magnesium acetate, a direct ashing method, or a method of ashing with sulfuric acid; and the amount of water is measured by Karl-Fischer method, a method using a drying aid, a vacuum thermal drying method, an atmospheric thermal drying method, or a plastic film method.

It is desired that the beer-taste beverage obtained in the method for production of the present invention is low in saccharides, matching in the favor of the low carbohydrate diet in the recent year. Therefore, the content of the saccharides of the beer-taste beverage obtained in the method for production of the present invention is preferably less than 0.5 g/100 mL, more preferably 0.4 g/100 mL or less, and even more preferably 0.3 g/100 mL or less. In addition, the lower limit of the content is, but not particularly set, usually 0.1 g/100 mL or so, which may be, for example, 0.15 g/100 mL or more, and 0.2 g/100 mL or more.

### (Acidulant)

As the acidulant used in the method for production of the present invention, it is preferable to use one or more acids selected from the group consisting of citric acid, lactic acid, phosphoric acid, and malic acid. In addition, in the method for production of the present invention, as an acid other than the above acids, succinic acid, tartaric acid, fumaric acid, glacial acetic acid or the like can be used. These acidulants can be used without limitations so long as the acidulants are accepted to be added to foods. In the method for production of the present invention, it is preferable to use a combination of lactic acid from the viewpoint of appropriately giving a moderate sour taste, and phosphoric acid from the viewpoint of appropriately giving an sour taste with a slightly stimulating taste.

The content of the acidulant in the beer-taste beverage obtained in the method for production of the present invention, calculated in terms of citric acid, is preferably 200 ppm or more, more preferably 550 ppm or more, and even more preferably 700 ppm or more, from the viewpoint of providing a beer-like taste, and the content is preferably 15000 ppm or less, more preferably 5500 ppm or less, and even more preferably 2000 ppm or less, from the viewpoint of acidity. Therefore, in the present invention, the content of the acidulant, calculated in terms of citric acid, includes preferred ranges such as from 200 ppm to 15000 ppm, preferably from 550 ppm to 5500 ppm, and more preferably from 700 ppm to 1500 ppm. Here, the amount calculated in terms of citric acid as used herein refers to an amount converted from an acidity of each of the acidulants on the basis of the acidity of citric acid. For example, the amount which is equivalent to 100 ppm of lactic acid, calculated in terms of citric acid, is 120 ppm, the amount which is equivalent to 100 ppm of phosphoric acid, calculated in terms of citric acid, is 200 ppm, and the amount which is equivalent to 100 ppm of malic acid, calculated in terms of citric acid, is 125 ppm.

The content of the acidulant in the beer-taste beverage refers to those calculated by analyzing with high-performance liquid chromatography (HPLC) or the like.

### (Hops)

In the method for production of the present invention, hops can be used as a part of the raw materials. Since the flavor tends to resemble beer, it is desired that hops are used in a part of the raw materials. When hops are used, usual pellet hops, powder hops or a hop extract used in the production of beer and the like can be appropriately selected and used in accordance with a desired flavor. In addition, hop working products such as isomerized hops and reduced hops may be used. The hops used in the method for production of the present invention embrace those products. Also, the amount of the hops is, but not particularly limited to, typically from 0.0001 to 1% by weight or so, based on the entire amount of the beverage.

### (Other Raw Materials)

In the method for production of present invention, other raw materials may be optionally used within the range that would not inhibit the effects of the present invention. For example, a sweetener (including a high-intensity sweetener), a bittering agent, a flavor (aromatic), an yeast extract, a colorant such as a caramel pigment, vegetable extracted saponin-based material such as soybean saponin or quillai saponin, a vegetable protein- and peptide-containing product such as maize or soybeans, an animal protein such as whey, dietary fibers, a seasoning such as amino acids, or an antioxidant such as ascorbic acid can optionally be used within the range that would not inhibit the effects of the present invention.

The pH of the beer-taste beverage obtained in the method for production of the present invention is from 3.0 to 5.0, preferably from 3.5 to 4.5, and more preferably 3.5 to 4.0, from the viewpoint of making the flavor of the beverage favorable.

### (Container-Packed Beverage)

The beer-taste beverage obtained in the method for production of the present invention can be packed into a container. The shapes of the containers are not limited in any manners, and the beer-taste beverage can be packed into a tightly sealed container such as a glass bottle, a can, a barrel, or a plastic bottle, whereby a beverage contained in a container can be provided.

### EXAMPLES

The present invention will be specifically described hereinbelow by the Examples, without intending to limit the scope of the present invention to the following Examples.

### < Amounts of Linalool, α-Pinene, β-Myrcene, D-Limonene, and Terpineol >

The quantified values were obtained in accordance with a method described in J. Agric. Food Chem., 61, 4758-4764 (2013).

### Preparation of Herb Spice Treated Products

### Examples 1 to 6 and Comparative Example 1

Coriander seeds were mixed with water as a herb spice so as to have a concentration shown in Table 1, and a herb spice-containing water obtained was treated with a treatment tank shown in Table 1 under the conditions shown in Table 1. The herb spice treated product obtained was allowed to cool in the air to a temperature as listed in Table 1, and the content of each ingredients of the contents was measured in accordance with the measurement method mentioned above. The results are shown in Table 1. Here, as the treatment tank, the open-system or tightly closed-system treatment tank is defined such that a case where a 60-L treatment tank could be completely plugged during the treatment is a tightly closed system, and a case of a treatment tank in which the plug was open is an open system. In either case, the volume of the herb spice-containing water before the treatment in the treatment tank was such that a volume of 50 to 90% by volume was filled in the entire volume of the treatment tank (a spatial volume of the void portions being 50 to 10% by volume). In addition, the concentration of the herb spice-containing water after the treatment is a value in which a final concentration is obtained from the amount of the treatment liquid, i.e., water used in the herb spice-containing water, of the beer-taste beverage.

### Examples 7 to 12 and Comparative Example 2

The herb spice treated product was prepared in the same manner as in Examples 1 to 6 and Comparative Example 1 except that orange peel was used as a herb spice so as to have a concentration shown in Table 2.

### Production of Beer-Taste Beverages

One-hundred liters of a filtered wort obtained by an ordinary method was heated to 98°C with a boiling kettle, and a herb spice treated product as listed in Table 1 or 2 was then added thereto. After stirring for one minute, the mixture was subjected to whirlpool rest, and rapidly cooled, and a solid content was appropriately removed with a strainer, to prepare a cold wort. Thereafter, an yeast was added to allow fermentation, a mixture was filtered, and a carbon dioxide gas pressure was then adjusted, to produce a beer-taste beverage.

### < Sensory Evaluations >

The flavors of the beer-taste beverages obtained were evaluated in accordance with the sensory tests according to a scoring method. Five well-trained sensory evaluators were asked to evaluate in a 5-point full score, "floral" and "spiciness" for the coriander seeds, and "fresh juiciness of orange" for the orange peel. On the bases that "very highly tasted" was given a score of 4, "tasted" a score of 3, "faintly tasted" a score of 2, "slightly tasted" a score of 1, and "not tasted" a score of 0, a mean score of evaluated scores was calculated. The evaluations were made in accordance with the following criteria based on the mean score. The results are shown in Table 2.

[Table 1]

**Table 1**

| | | | Comp. Ex. | Ex. | | | | | |
|---|---|---|---|---|---|---|---|---|---|
| | | | 1 | 1 | 2 | 3 | 4 | 5 | 6 |
| Content of coriander seeds | Concentration before treatment, g/L | | 0.2 | 40 | 40 | 40 | 40 | 40 | 40 |
| | Concentration after treatment, g/L | | 0.2 | 0.2 | 0.2 | 0.2 | 0.2 | 02 | 0.2 |
| Treatment tank | Open system or tightly closed system | | Open system | Tightly closed system | Tightly closed system | Tightly closed system | Tightly closed system | Tightly closed system | Tightly closed system |
| Treatment conditions | Temperature, °C | | 100 | 100 | 100 | 100 | 100 | 120 | 130 |
| | Pressure, MPa | | 0 | 0.01 | 0.01 | 0.01 | 0.01 | 0.20 | 0.27 |
| | Time, minute | | 20 | 10 | 20 | 40 | 60 | 15 | 15 |
| After treatment | Temperature, °C | | 100 | 100 | 100 | 100 | 100 | 120 | 130 |
| Herb spice treated product | (1) | α-Pinene, ppb | 0.0 | 4.6 | 2.4 | 5.9 | 4.3 | 3.9 | 3.5 |
| | | β-Myrcene, ppb | 15.7 | 46.0 | 38.7 | 39.8 | 35.9 | 39.3 | 41.3 |
| | | D-Limonene, ppb | 8.8 | 29.9 | 24.6 | 30.4 | 34.1 | 36.5 | 36.8 |
| | | Terpineol, ppb | 12.0 | 16.0 | 17.2 | 21.8 | 11.5 | 21.3 | 43.3 |
| | (2) | Linalool, ppb | 1134.0 | 1188.7 | 1135.2 | 1117.3 | 939.2 | 951.5 | 1017.2 |
| | Total of (1)/ (2) | | 1.0 | 2.5 | 2.3 | 2.7 | 2.8 | 3.3 | 3.8 |
| Sensory score of beer-taste beverage | Floral | | 2.7 | 3.1 | 3.2 | 3.2 | 2.8 | 2.8 | 2.8 |
| | Spiciness | | 1.5 | 1.6 | 1.7 | 2.0 | 1.9 | 2.7 | 2.7 |

[Table 2]

**Table 2**

| | | | Comp. Ex. | Ex. | | | | | |
|---|---|---|---|---|---|---|---|---|---|
| | | | 2 | 7 | 8 | 9 | 10 | 11 | 12 |
| Content of orange peel | Concentration before treatment, g/L | | 2 | 40 | 40 | 40 | 40 | 40 | 40 |
| | Concentration after treatment, g/L | | 2 | 2 | 2 | 2 | 2 | 2 | 2 |
| Treatment tank | Open system or tightly closed system | | Open system | Tightly closed system | Tightly closed system | Tightly closed system | Tightly closed system | Tightly closed system | Tightly closed system |
| Treatment conditions | Temperature, °C | | 100 | 100 | 100 | 100 | 100 | 120 | 130 |
| | Pressure, MPa | | 0 | 0.01 | 0.01 | 0.01 | 0.01 | 0.20 | 0.27 |
| | Time, minute | | 20 | 10 | 20 | 40 | 60 | 15 | 15 |
| After treatment | Temperature, °C | | 100 | 100 | 100 | 100 | 100 | 120 | 130 |
| Herb spice treated product | (1) | α-Pinene, ppb | 4.2 | 20.0 | 23.7 | 17.2 | 5.0 | 4.6 | 3.4 |
| | | β-Myrcene, ppb | 26.4 | 76.3 | 93.4 | 64.7 | 12.9 | 15.0 | 15.9 |
| | | D-Limonene, ppb | 1568.5 | 6494.0 | 8189.8 | 5109.8 | 306.5 | 501.1 | 580.7 |
| | | Terpineol, ppb | 51.6 | 58.7 | 80.3 | 86.6 | 33.3 | 112.4 | 271.3 |
| | (2) | Linalool, ppb | 106.8 | 103.5 | 106.0 | 121.6 | 48.3 | 61.8 | 50.6 |
| | Total of (1)/ (2) | | 1.0 | 4.2 | 5.1 | 2.8 | 0.5 | 0.7 | 1.1 |
| Sensory score of beer-taste beverage | Fresh juiciness of orange | | 2.0 | 2.7 | 2.9 | 3.4 | 3.2 | 3.0 | 2.5 |

It can be seen from Tables 1 and 2 that Examples 1 to 12 in which the treatment was carried out in a tightly closed system of a temperature of 100°C or higher and 140°C or lower and a pressure of 0.01 MPa or more and 0.46 MPa or less could efficiently give a herb spice aroma, as compared to Comparative Examples 1 and 2 in which the treatment was carried out in an open system.

### INDUSTRIAL APPLICABILITY

According to the present invention, flavor ingredients can be more conveniently extracted from herb spices, so that a new taste can be provided as a luxurious product.

## Claims

1. A method for producing a beverage comprising adding a herb spice treated product to a beverage, or in at least any one of the steps for producing a beverage, wherein the herb spice treated product is obtained by treating a liquid comprising a herb spice in a tightly closed container under the conditions of a temperature of 100°C or higher and 140°C or lower, and a pressure of 0.01 MPa or more and 0.46 MPa or less.

2. The method for production according to claim 1, wherein the concentration of dissolved oxygen of the medium used in the liquid comprising a herb spice is from 6.0 to 22 ppm.

3. The method for production according to claim 1, wherein the concentration of dissolved oxygen of the medium used in the liquid comprising a herb spice is from 0.001 to 3.0 ppm.

4. The method for production according to any one of claims 1 to 3, wherein the treatment in a tightly closed container is carried out in a state in which the liquid comprising a herb spice is filled to a volume equal to or less than 50% by volume of the container.

5. The method for production according to any one of claims 1 to 4, wherein the treatment in a tightly closed container is carried out in a state in which the remaining space excluding the portions occupied by the liquid comprising a herb spice is nitrogen replaced or oxygen replaced.

6. The method for production according to any one of claims 1 to 5, wherein the beverage is a beer-taste beverage.
